(19) Europäisches Patentamt / European Patent Office / Office européen des brevets

(11) **EP 3 869 016 B1**

(12) **EUROPEAN PATENT SPECIFICATION**

(45) Date of publication and mention
of the grant of the patent:
**16.08.2023 Bulletin 2023/33**

(21) Application number: **21167878.4**

(22) Date of filing: **25.05.2018**

(51) International Patent Classification (IPC):
**F01M 1/08** *(2006.01)* **F01M 1/16** *(2006.01)*
**F16N 7/34** *(2006.01)* **F16N 7/38** *(2006.01)*
**B05B 17/06** *(2006.01)*

(52) Cooperative Patent Classification (CPC):
**F01M 1/08; B05B 17/0607; F01M 1/16; F16N 7/34;**
**F16N 7/38;** F01M 2001/083; F16N 2210/06

(54) **METHOD FOR LUBRICATING LARGE TWO-STROKE ENGINES USING CONTROLLED CAVITATION IN THE INJECTOR NOZZLE**

VERFAHREN ZUR SCHMIERUNG VON GROSSEN ZWEITAKTMOTOREN UNTER VERWENDUNG EINER GESTEUERTEN KAVITATION IN DER EINSPRITZDÜSE

PROCÉDÉ DE LUBRIFICATION DE GROS MOTEURS À DEUX TEMPS PAR CAVITATION CONTRÔLÉE DANS LA BUSE D'INJECTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2017 DK PA201770382**

(43) Date of publication of application:
**25.08.2021 Bulletin 2021/34**

(62) Document number(s) of the earlier application(s) in
accordance with Art. 76 EPC:
**18727008.7 / 3 635 223**

(73) Proprietor: **Hans Jensen Lubricators A/S
9560 Hadsund (DK)**

(72) Inventor: **Ravendran, Rathesan
9000 Aalborg (DK)**

(74) Representative: **Patrade A/S
Ceresbyen 75
8000 Aarhus C (DK)**

(56) References cited:
**EP-A2- 1 116 805** **WO-A1-2017/071706**
**US-A1- 2009 140 067**

**Description**

FIELD OF THE INVENTION

The present invention relates to a method for lubricating large two-stroke engines.

BACKGROUND OF THE INVENTION

Due to the focus on environmental protection, efforts are on-going with respect to reduction of emissions from marine engines. This also involves the steady optimization of lubrication systems for such engines, especially due to increased competition. One of the economic aspects gaining increased attention is a reduction of lubrication oil consumption, not only because of environmental protection but also because this is a significant part of the operational costs of ships. However, the longevity of engines should not be compromised by the reduction of oil consumption, as proper lubrication must be ensured at all times to minimize wear and provide longevity of the engine. Thus, there is a need for steady improvements with respect to lubrication.

For lubrication of large slow-running two-stroke marine diesel engines, several different systems exist, including injection of lubrication oil directly onto the cylinder liner or injection of oil quills onto the piston rings.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubrication oil into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2017/071706, WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of 37 bar. In comparison, the oil pressure is less than 30 bar and often less than 10 bar in systems working with compact oil jets that are introduced into the cylinder.

In such large marine engines, a number of injectors are arranged in the circumference of the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

Optimization of the spray in SIP lubrication is undergoing steady development. Although, lubrication injectors have some similarities with fuel injectors, comparison also shows different behaviour and different effects. This is mainly attributed to the different working conditions for the injectors, which leads to different effects such as viscosity, surface tension and liquid pressure. Accordingly, results from studies of fuel injection are not automatically transferable to lubricant injection, and the difference in behaviour is in some cases surprising.

One of the important factors for spray formation is cavitation in the nozzle, which is formation of vapour cavities inside the liquid due to evaporation. Cavitation in the nozzle influences the atomization of the liquid because it introduces pronounced disturbances in the liquid stream, which destabilizes the jet. In the field of fuel injection, such cavitation in the nozzle has been intensively studied, however, there are also a few studies on cavitation in lubricant injectors. In the following, reference is made to a number of publications, which are mentioned at the end of this section in alphabetical order and which are mentioned in the following by reference to the name of the first author.

Formation of vapour cavities in the nozzle, accordingly, called cavitation, takes place when the local pressure of the liquid drops below its vapor pressure (Franc and Michel, 2006; Li, 2014). The most well-known type of cavitation in spray nozzles is geometrically induced cavitation (Dumouchel et al., 2013). This occurs when a change in geometry of the flow path, through which the liquid flows, leads to a pressure drop of a sufficient degree to evaporate the liquid.

Cavitation in the nozzle enhances the jet atomization, because it introduces large amplitudes of disturbances which result in a stochastic behavior of the liquid stream and destabilizes the jet (Bergwerk, 1959). Payri et al. (2004) investigated the influence of different nozzle geometries for diesel fuel injectors and showed that cavitation leads to increase in spray cone angle and in spray hole outlet velocity.

It had also been observed that, once the geometric cavitation reaches the exit of the nozzle, its structure transform from a bubbly cloud into a smoothly curved lines film cavitation, which greatly influences the exiting spray structure (Mirshahi, 2015).

For example, a special fuel injection valve for providing cavitation during fuel injection is disclosed in US patent number US7712684.

For high-viscous liquids, Tamaki and Shimizu (2002) showed that shorter breakup-length and smaller Sauter mean diameter were obtained using low fluid pressure when bypassing the liquid through an intersection, which promotes cavitation. Sou et al. (2007) found that atomization is enhanced when the cavitation extends almost to the exit of the injector nozzle but is suppressed if the cavitation extends to the nozzle exit. This is because the cavitation vanishes as downstream air moves upward into the nozzle. This mechanism is known as hydraulic flip (He et al., 2016).

Not only sharp inlet orifices promote cavitation but also parameters, such as needle lift, length to diameter ratio of the discharge orifice, curvature of the inlet edge, liquid properties, and system pressure (Dong et al., 2016; Jollet et al., 2014.; Pratama et al., 2015; Schmidt and Corradini, 2001).

Andriotis et al. (2008) investigated non-axial injection conditions and showed that the swirling liquid flow inside the nozzle leads to complex phenomena, as string cavitation or vortex cavitation.

Cavitation can also be influenced by vibrations in nozzles at high frequencies, for example ultrasonic frequencies, optionally in the range of 20-200 kHz, for example 20-100 kHz. Ultrasonic excitation in nozzles is disclosed in the prior art (Khmelev 2006, Rajan 2001). An example of an ultrasonic nozzle is given in US patent No. 4,659,014 by Soth et al. Other examples are given in US2009/140067 and EP1116805 for achieving high flow rates at low pressure.

Special attention to cavitation in lubricant SIP injectors is found in the work by Gardhouse (2014) on the influence of cavitation on spray formation. A nozzle with a 4.8 mm sac hole and with an exit spray hole diameter of 0.3 mm was used for the study. Development of cavitation from the nozzle entrance to the nozzle exit was investigated with respect to its effect on the near and far field spray structure. The conclusion was that for such injectors, certain low viscosities would induce significant nozzle flow cavitation and lead to a splitting of the spray, and ultimately less controlled liner coverage.

The conclusion from Gardhouse is that cavitation, especially near the nozzle tip, is disadvantageous for the spray stability and leads to a less controlled spray. This is largely in agreement with the work by Sou et al. (2007), as mentioned above, in which atomization was found to be suppressed if the cavitation extends to the nozzle exit.

As far as the conclusions of these findings can be applied to lubricant injection, which behaves differently from fuel injection due to different viscosities, cavitation at the nozzle exit is disadvantageous. In other words, parameters, such as nozzle dimensions, as well as pressure and viscosity of the lubricant, should be chosen such that cavitation, especially at the nozzle exit, is avoided. This is also in agreement with current commercial SIP injection systems for marine engines, which are operated at parameters that do not cause cavitation in the nozzle.

As there is a steady motivation for improvement of lubrication in large two-stroke gas and diesel engines, for example marine engines or engines for power plants, cavitation design advantageously is part of the considerations for optimising the spray, in particular for SIP injection.

## References

Andriotis, A., Gavaises, M., and Arcoumanis, C., Vortex flow and cavitation in diesel injector nozzles, Journal of Fluid Mechanics, vol. 610, no. August 2008, pp. 195-215, 2008.

Bergwerk, W., Flow pattern in diesel nozzle spray holes, ARCHIVE: Proceedings of the Institution of Mechanical Engineers 1847-1982 (vols 1-196), vol. 173, no. 1959, pp. 655-660, 1959. URL http://pme.sagepub.com/content/173/1/655.short

Bicer, B. and Sou, A., Turbulence and Bubble Dynamics Models to Simulate Transient Cavitation Flow in Fuel Injector Nozzle B., ILASS Asia, 13th International Conference on Liquid Atomization and Spray Systems, pp. 1-8, 2015.

Brusiani, F., Falfari, S., and Pelloni, P., Influence of the diesel injector hole geometry on the flow conditions emerging from the nozzle, Energy Procedia, vol. 45, pp. 749-758, 2014.

Dabiri, S., Sirignano, W. A., and Joseph, D. D., Cavitation in an orifice flow, Physics of Fluids, vol. 19, no. 7, p. 072112, 2007.

Dong, P., Inaba, T., Nishida, K., and Shimo, D., Characteristics of the internal flow and the nearfield spray of a single-hole injector and a multi-hole injector for diesel engines, Proceedings of the Institution of Mechanical Engineers, Part D: Journal of Automobile Engineering, vol. 230, no. 5, pp. 632-649, 2016.

Dumouchel, C., Leboucher, N., and Lisiecki, D., Cavitation and primary atomization in real injectors at low injection pressure condition, Experiments in Fluids, vol. 54, no. 6, 2013.

Franc, J.-P. and J.-M., Fundamentals of Cavitation, 2006.

Gardhouse, T., Sercey, G., Crua C., Edwards, S., Thompson, C., Shadowgraphic Characterisation of Marine Lubricant Sprays, ILASS - Europe 2014, 26th Annual Conference on Liquid Atomization and Spray Systems, Sep. 2014, Bremen, Germany

He, Z., Guo, G., Tao, X., Zhong, W., Leng, X., and Wang, Q., Study of the effect of nozzle hole shape on internal flow and spray characteristics, International Communications in Heat and Mass Transfer, vol. 71, pp. 1-8, 2016.

Jollet, S., Hansen, H., Bitner, K., Niemeyer, D., and Dinkelacker, F., Transparent Nozzles With High Pressure Conditions, ILASS Europe, 26th Annual Conference on Liquid Atomization and Spray Systems, pp. 8-10, 2014.

Jollet, S., Heilig, a., Bitner, K., Niemeyer, D., and Dinkelacker, F., Comparison of experiments and numerical simulations of high pressure transparent injection nozzles Experimental testrig, no. September, pp. 1-4, 2013.

Khmelev, V.N., Shalunov, A.V., Smerdina, E.S., The Cavitation Spraying Of The Viscous Liquids, 2006, Published in: Electron Devices and Materials, 2006. Proceedings. 7th Annual 2006 International Workshop and Tutorials, available on the Internet u-sonic.ru/downloads/edm06/spray_eng.pdf.

Li, Z., Criteria for jet cavitation and cavitationjet drilling, International Journal of Rock Mechanics and Mining Sciences, vol. 71, pp. 204-207, 2014. URL http://dx.doi.org/10.1016/j.ijrmms.2014.03.021

Mariasiu, F., Numerical Investigation of the Effects of Biofuel Characteristics on the Injector Nozzle Erosion Process, Tribology Transactions, vol. 56, no. 2, pp. 161-168, 2013.

Mirshahi, M. Yan, Y., Nouri, JM. Influence of cavitation on near nozzle exit spray. Paper presented at the CAV 2015. 9th Int. Symp. On Cavitation, 6-10 Dec 2015, Lausanne, Switzerland.

Payri, F., Bermudez, V., Payri, R., and Salvador, F. J., The influence of cavitation on the internal flow and the spray characteristics in diesel injection nozzles, Fuel, vol. 83, no. 4-5, pp. 419-431, 2004.

Pratama, R. H., Sou, A.,Wada, Y., and Yokohata, H., Cavitation in Mini-Sac Nozzle and Injected Liquid Jet, ICLASS 2015, 13th International Conference on Liquid Atomization and Spray Systems, vol. 1, pp. 3-9, 2015.

Rajan, R. and Pandit, A.B., Correlations to predict droplet size in ultrasonic atomisation, Ultrasonics 39 (2001) 235-255.

Roohi, E., Zahiri, A. P., and Passandideh-Fard, M., Numerical simulation of cavitation around a two-dimensional hydrofoil using VOF method and LES turbulence model, Applied Mathematical Modelling, vol. 37, no. 9, pp. 6469-6488, 2013.

Schmidt, D. P. and Corradini, M. L., The internal flow of Diesel fuel injector nozzles: a review, Int J Engine Research. JER 00201 ImechE, vol. 2, no. 6, pp. 1-22, 2001. Sciences, M. and Square, N., Vortex flow and cavitation in diesel injector nozzles, vol. 610, pp. 195-215, 2008.

Soriano-Palao, O. J., Sommerfeld, M., and Burkhardt, A., Modelling the influence of the nozzle geometry on the primary breakup of diesel jets, International Journal of Spray and Combustion Dynamics, vol. 6, no. 2, pp. 113-146, 2014.

Sou, A., Hosokawa, S., and Tomiyama, A., Effects of cavitation in a nozzle on liquid jet atomization, International Journal of Heat and Mass Transfer, vol. 50, no. 17-18, pp. 3575-3582, 2007.

Tamaki, N. and Shimizu, M., Enhancement of Atomization of High-Viscous Liquid Jet By Pressure Atomized Nozzle, ILASS Europe, 12th Triennial International Conference on Liquid Atomization and Spray Systems, 2002.

Yuan, W., Sauer, J., and Schnerr, G. H., Modeling and computation of unsteady cavitation flows in injection nozzles, Mecanique et Industries, vol. 2, no. 5, pp. 383-394, 2001.

## DESCRIPTION / SUMMARY OF THE INVENTION

It is therefore the objective of the invention to provide an improvement in the art. A particular objective is to provide a better control of lubricant spray injection by the injector. Especially, it is the objective to improve lubrication with SIP valves in a large two-stroke engine. These objectives are achieved by a method for lubricating a large two-stroke engine according to claim 1.

It has been found that cavitation extends all the way to the nozzle exit by a method providing ultrasonic vibrations in the nozzle and providing the Reynolds number for the lubricant in the nozzle aperture above 450 for example above 500.

The method will be further described in the following.

The large two-stroke engine comprises a cylinder with a reciprocal piston inside and with a plurality of lubricant injectors distributed along a perimeter of the cylinder for injection of lubricant into the cylinder at various positions on the perimeter during injection phases. For example, the engine is a marine engine or a large engine on a power plant. Typically, the engine is burning diesel or gas fuel.

The term injection phase is used for the time during which lubricant is injected into the cylinder by the injector. The term injection cycle is used for the time it takes to inject lubricant by the injector into the cylinder and until the next injection. This terminology is in line with the above-mentioned prior art.

The term injector is herein used for a lubricant injection valve system comprising a housing with a lubricant inlet and one single injection nozzle with a nozzle exit from which the lubricant leaves the nozzle into the cylinder as a spray, the nozzle exit having an exit aperture with an exit size S. For example, the exit aperture is circular with a diameter D, in which case the diameter D is a measure for the size S. If the exit aperture deviates from a circular shape, a potential measure for the size S is the aperture area or an averaged diameter; the latter being useful in case of slight oval or elliptical deviation from a circle. For example, for a noncircular exit aperture, the cross-sectional dimension is an equivalent diameter calculated as twice the square root of the ratio between the cross-sectional area and the number Pi≈3.14. The nozzle has one or more, typically not more than two, nozzle exits.

In SIP injectors, the nozzle comprises a spray hole, formed as a channel with a length L, for example between 0.5 and 1 mm, one end of which forms the nozzle exit. In typical injectors, nozzle comprises a sac hole for flow of lubricant to the spray hole that extends from the sac hole to the nozzle exit. Typically, the central longitudinal axis of the spray hole has an angle with a central longitudinal axis of the sac hole, for example in the range of 30 to 90 degrees. The cross-sectional area of the sac hole perpendicular to its central longitudinal axis is often larger than the cross-sectional area of the spray hole perpendicular to its central longitudinal axis.

Optionally, a controller is provided as an add-on system for upgrade. The controller comprises a computer or is electronically or wirelessly connected to a computer. Advantageously, the computer is configured for monitoring parameters for the actual state and motion of the engine. In cooperation with the computer, on the basis of the parameters, the controller controls the amount and timing of the lubricant injection by the injectors during an injection phase. Optionally, the engine comprises a controller. As will become more apparent in the following, in advantageous embodiments, the controller is configured to also control the lubricant pressure and optionally also the temperature of the lubricant.

As it was discussed in the introduction, the prior art on lubricant injection draw the conclusion that cavitation, especially near the nozzle tip, is disadvantageous for the spray stability, distribution of lubrication oil, and leads to a less controlled spray. Accordingly, cavitation has not been used in practice for lubricant injection in large marine engines, neither for jet injection nor for SIP injection. The parameters for spray injection, in particular SIP injection, have been outside the range where cavitation is achieved.

However, in contrast to the conclusions in the prior art and against the trend in the field, further detailed studies have surprisingly revealed that cavitation for lubricant in the nozzle can be used to provide stable , controlled injection of sprays, and uniform distribution of lubrication oil, which is a crucial factor for optimized SIP lubrication.

In studies leading to the invention, not only cavitation as such has been found beneficial for spray formation of lubricants, but spray quality, control, and stability is even improved if the cavitation extends to the nozzle exit. Whereas prior art particularly teaches that cavitation should not reach the nozzle exit, as this is believed to lead to instabilities and a non-uniform spray distribution, it has surprisingly been found that the opposite is the case for improving spray conditions for lubricant injection. This different understanding in the prior art is believed to stem from conclusions drawn primarily from observations for low-viscous liquids, such as water and fuel (Sou 2007). However, even earlier reports on experiments using lubricants in injector nozzles (Gardhouse 2014) have drawn conclusions in line with the other prior art and have overlooked the advantageous effect of cavitation that reaches to the nozzle exit.

Accordingly, the method as presented herein comprises inducing lubricant cavitation in the nozzle during the injection, for example cavitation that extends to the nozzle exit in order to influence the characteristics of the spray by the disturbances introduced by cavitation. In some cases, it is advantageous, that cavitation extends to at least halfway through the spray hole, for example to at least half the distance between the sac hole and the nozzle exit.

According to a practical method of the invention, lubricant is provided with a viscosity $\mu$ and a pressure P to the nozzle exit that has an exit aperture size S, for example a diameter D of the exit aperture, such that cavitation is created in the nozzle during the injection phase, optionally the cavitation extending to the nozzle exit. For examples, the viscosity $\mu$ and/or the pressure P is/are adjusted such that cavitation in the nozzle, for example at the nozzle exit, is achieved merely due to the restricted flow of the lubricant through the nozzle and nozzle aperture.

However, in order to promote cavitation in the nozzle, for example at the nozzle exit, it is also possible to mechanically influence the flow additionally in order to promote cavitation in the nozzle, for example at the nozzle exit. One option is to provide ultrasonic vibrations in the nozzle. An ultrasonic spray nozzle is disclosed in US patent No. 4,659,014 by Soth et al. For example, the injector comprises an ultrasonic transducer, optionally piezo transducer. Advantageously, the transducer is provided at or in the nozzle, optionally near or at the nozzle exit.

Selection of viscosity of the lubricant is done by selecting a specific lubricant. Viscosity can further be adjusted by varying the temperature, as lubricant has decreasing viscosity at increasing temperature. However, as investigations have revealed, for marine engines, typically used lubricants are very similar in viscosity, even over a wide range of temperatures.

Pressure is selected by providing a certain lubricant pressure from the lubricant pump. For example, pressure can be adjusted by adjustment of the pump that is pressurizing the lubricant or by suitable pressure adjustment valves.

The most important factors determining cavitation are exit aperture size S, for example diameter D, in addition to lubricant viscosity and pressure. However, although to a lesser extent among commonly used SIP injectors, also nozzle geometry plays a role. Therefore, it is advised, prior to final operation, to perform a laboratory test for each type of injector that differs in geometry from already tested injectors. The term laboratory test is typically performed in a laboratory, but can in certain circumstances also be performed on site of the engine. In the latter case, the site takes the role of a laboratory. The testing of a specific type of injector that has a nozzle with an exit aperture of size S, for example diameter D, involves selection of the viscosity $\mu$ and the pressure P of the lubricant, such that cavitation is provided in the nozzle, for example extending to the nozzle exit or at least half way through the nozzle hole. For example, the viscosity $\mu$ is adjusted, as described above by temperature variation, or the pressure P is adjusted or both are adjusted, until cavitation occurs in the nozzle, for example until the cavitation extends to the nozzle exit or at least halfway through the nozzle hole. The parameters for viscosity and pressure are then recorded. Recorded are single values or range of values for the pressure P and the viscosity $\mu$, or equivalently temperature for a specific type of lubricant. The values or ranges can be related to not only the aperture size S but also to other parameters, such as geometrical details of the nozzle.

The recorded parameter values from a laboratory test for a specific type of injectors with a nozzle exit size S, for example diameter D, are then received and used when providing the same or similar type injectors in the engine. In practice, the viscosity $\mu$ and the pressure P of the lubricant as per the recorded parameter values are used when running the engine for causing injection of lubricant under cavitation conditions, where cavitation is provided in the nozzle, for example extending to the nozzle exit or at least half way through the nozzle hole, during operation of the engine. In some embodiments, the viscosity is stated in the record, and the user would select a corresponding lubricant.

For example, experiments showed cavitation if D is at least 0.3 mm and the lubricant has a viscosity $\mu$ less than 0.05 Pa·sec and is injected into the cylinder through the nozzle exit at a pressure P>20 bar. This was shown for a nozzle with a sac hole having a diameter of 1 mm, a spray hole that is 0.75 mm long and has an angle of 66° relative to the central longitudinal axis of the sac hole. However, as will be explained in more detail below, with reference to simulations, variations of the angle have only little influence on the cavitation, and the above parameters for viscosity and pressure to achieve cavitation are also valid if the spray hole lengths are varied within in the range 0.5-1 mm.

The viscosity can be adjusted by changing the temperature of the lubricant. This is especially practical, as this gives a wide range of viscosities for adjustment. This is useful because, as mentioned above, typical lubricants used for injection into marine engines have similar viscosities. For example, the record from the laboratory proposes lubricant of a specific type of lubricant or a plurality of similar types of lubricant, optionally from different brands, with a specific viscosity $\mu(T)$ dependent on temperature T of the lubricant. The parameter values in the record include a value for pressure P and for temperature T for the specific type or types of lubricant, such that operation of the injector with these parameter values and this specific type or types of lubricant implies cavitation in the nozzle, for example extending to the nozzle exit.

In practice, once recorded values have been established, these are provided to the user for the specific type of injectors. For example, it is provided along as a data sheet when selling the injectors.

The user selects the viscosity $\mu$ by selecting a certain lubricant type and the viscosity is potentially further adjusted to the recorded parameter value by regulating the temperature for the lubricant when injected through the nozzle. Also, the pressure P of the lubricant is adjusted to the recorded values, for example by varying the pressure of the lubricant pump or by using pressure regulation valves. The engine operates then with these parameter values for causing injection of lubricant under cavitation conditions.

Although, in principle, it is sufficient to find a single set of parameter values for pressure and viscosity, including the temperature setting for the lubricant, it may be advantageous to provide a range of parameter values for viscosity and/or pressure. This makes it easier to keep the optimised cavitation settings, despite variations in temperature and/or pressure, or when a different lubricant is selected. Alternatively, a range of parameter values for the temperature T or pressure P, or both T and P, of the specific type or types of lubricant are provided. Within the range or ranges, the operation of the injector implies cavitation in the nozzle, for example extending to the nozzle exit.

In a practical embodiment, the method comprises, accordingly, providing multiple injectors, for example of the same type, in the engine, selecting the viscosity $\mu$ and the pressure P of the lubricant, or alternatively selecting the pressure P and the temperature T of the specific type of lubricant, within the recorded parameter range or ranges and running the engine with these parameter values for causing injection of lubricant under cavitation conditions during operation of the engine.

Optionally, the method comprises experimentally varying the viscosity $\mu$ or the pressure P or both within a parameter value range, for example inducing cavitation in the nozzle so that it is extending to the nozzle exit, and recording the adjusted parameter ranges for the viscosity $\mu$ and the pressure P.

After the testing, when injectors of the same or a similar type are provided in the engine, the viscosity $\mu$ and the pressure P of the lubricant are adjusted to parameter values within the parameter value range or ranges recorded during the experiments. Also, in this case, the engine is then run with these parameters for causing injection of lubricant under cavitation conditions during operation of the engine, despite potentially varying the parameter within the cavitation range or ranges. Potentially, the cavitation is extending to the nozzle exit or at least halfway through the nozzle hole.

For example, during operation of the engine, the lubricant pressure P is varied. Optionally the viscosity $\mu$ is kept constant, which is achieved by keeping the temperature of the lubricant at the nozzle at the same temperature.

Alternatively, with or without varying the pressure P, the viscosity $\mu$ of the lubricant is varied by varying the temperature T of the lubricant at the nozzle. Potentially, this variation of the lubricant temperature is achieved by lubricant flow through a temperature adjustment unit that comprises a heater or a cooler or both. For example, this temperature adjustment unit has a temperature adjustment mechanism for varying the temperature within a predetermined range of temperatures, wherein the predetermined range of temperatures for a selected lubricant type causes viscosity changes only within the range of viscosities that for the selected pressure causes cavitation in the nozzle that is extending to the nozzle exit. Typically, the temperature adjustment is computer controlled by a controller in cooperation with the computer.

In some experiments, it has turned out that a good injection pressure is above 60 bar, in contrast to the presently commercially used SIP operation pressure of 37 bar in marine engines. Cavitation to the nozzle exit was observed in some experiments at temperatures above 90 °C while the cavitation did not extend to the nozzle exit for lower temperatures. In experiments, these results were found for a spray nozzle with an exit diameter of 0.3 mm. The used oil was ExxonMobil® Mobilgard™ 570.

The Reynolds number for the lubricant in the nozzle aperture was found to be advantageously above 450 for example above 500, in order for cavitation to extend all the way to the nozzle exit. The Reynolds number is a good parameter in that it includes a relative relationship between the flow, viscosity and the exit diameter.

Deeper study of the dependency of cavitation on the related parameters has revealed that the cavitation number (C) can be described as a simple mathematical expression dependent only on pressure P and viscosity $\mu$, as well as D, where D is the nozzle exit aperture diameter, if the nozzle is circular, or an equivalent diameter which is two times the square root of the nozzle exit area divided by Pi≈3.14, if the nozzle is not circular.

The mathematical expression is as follows,

$$C(\mu, P, D) = A1 * e^{\left(\frac{B1*G1}{\ln(G2*\mu)}\right)} + C1 * e^{\left(\frac{F1*G1}{\ln(G2*\mu)}\right)} + A2 * e^{(B2*P)} + C2 * e^{(F2*P)} + A3 * D + B3$$

wherein the values of the constants are given as:

| Constant | Value |
|---|---|
| A1 | 0.6689 |
| B1 | 0.001233 |
| C1 | -11.39 |
| F1 | -0.03487 |
| A2 | 0.7888 |
| B2 | 0.000855 |
| C2 | -1.473 |
| F2 | -0.033 |
| A3 | 16.27 |
| B3 | -5.28 |
| G1 | 149.94 |
| G2 | 163.93 |

Cavitation is present when the cavitation number is C>0. Investigation has shown that for C>0.2, cavitation extends to the nozzle exit.

As mentioned above, in typical lubricant injectors, the nozzle comprises a spray hole, one end of which forms the nozzle exit and the opposite end of which is flow-communicating with a sac hole. In typical SIP injectors, a central longitudinal axis of the spray hole is angled relative to the central longitudinal axis of the sac hole, the angle being in the range of 30 to 90 degrees, and the cross-sectional area of the sac hole perpendicular to its central longitudinal axis is larger than the cross-sectional area of the spray hole perpendicular to its central longitudinal axis. A typical length of the spray hole is in the range of 0.5-1 mm.

For such range of nozzles, a good criteria for cavitation is C>0.1, as it expresses a substantial extension of the cavitation towards the nozzle, for example to at least half the distance between the sac hole and the nozzle exit.

As it appears from the above, the described method is useful for SIP injection. In order to provide a proper SIP lubrication during running of the engine, sprays with atomized droplets of lubrication oil are repeatedly injected into scavenging air in the cylinder by the injectors prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC.

For example, the injectors comprise a spray nozzle having exit apertures of between 0.1 and 1 mm in diameter, for example between 0.2 and 0.5mm, for ejecting the spray or atomized droplets, also called mist of oil. In the performed experiment, a nozzle exit diameter D=0.3 mm was used.

As mentioned, the viscosity influences the cavitation and the atomization of the spray. Lubrication oils used in marine engine, such as ExxonMobil® Mobilgard™ 560VS, have a typical kinematic viscosity of about 220 cSt at 40°C and 20 cSt at 100°C, which translates into a dynamic viscosity of between 202 and 37 mPa·s. Other lubrication oils used for marine engines are other Mobilgard™ oils as well as Castrol® Cyltech oils, which have largely the same viscosity in the range of 40-100°C, and decreasing viscosity above 100°C, and are all useful for atomization.

Typically used lubricants for marine engines follow a viscosity given by the temperature as follows.

$$\mu(T) = 0.00610 \cdot e^{1246/(8.31 \cdot T)},$$

wherein T is in degrees Celsius and for T>20°C. For oils that have a viscosity given by the above formulae for viscosity in dependence on the temperature, the following embodiments for triplets of (D, T, P) have been found experimentally for cavitation and cavitation to the nozzle exit, respectively:

Cavitation:

D≥0.3 mm, T≥60°C, P≥60 bar
D≥0.3 mm, T≥100°C, P>10 bar
D≥0.3 mm, T≥140°C, P≥10 bar
D>0.2mm, T≥100°C, P≥40 bar
D>0.3mm, T≥60°C, P≥40 bar
D>0.2 mm, T≥100°C, P≥20 bar

Cavitation to the nozzle exit

D≥0.3 mm, T≥60°C, P≥150 bar
D≥0.3 mm, T≥100°C, P>10 bar
D≥0.3 mm, T≥140°C, P>10 bar
D>0.23 mm, T≥100°C, P≥40 bar
D≥0.5mm, T≥60°C, P≥40 bar
D>0.21 mm, T≥100°C, P≥60 bar
D>0.31 mm, T≥100°C, P>20 bar

In the above mentioned cavitation intervals for the triplets (D, T, P), the given temperatures minimum values can be converted into a corresponding viscosity maximum values using the above expression $\mu(T) = 0.00610 \cdot e^{1246/(8.31 \cdot T)}$. These viscosities values are valid and useful when using other lubricants than those lubricants for which the viscosity/temperature relationship is given by this expression. For example, for the triplet (D≥0.3 mm, T≥60°C, P≥60 bar), a corresponding viscosity based triplet is (D≥0.3 mm, μ≤0.074 Pa s, P≥60 bar).

It is for convenience pointed out that 1 bar = 0.1 MPa.

SHORT DESCRIPTION OF THE DRAWINGS

The invention will be explained in more detail with reference to the drawing, where

FIG. 1 illustrates one half of a cylinder 1 of a large two-stroke engine, for example a marine diesel engine;
FIG. 2 shows the experimental setup used to detect the internal nozzle cavitation;
FIG. 3 illustrates an internal geometry of the HJ-SIP spray injection nozzle used in the experiment;
FIG. 4 are high speed shadow-graphic images of the internal nozzle flow. The images are taken after 0.13 ms after injection;
FIG. 5 are high speed shadow-graphic images of the spray. The images are taken after 0.13 ms after injection;
FIG. 6 illustrates of edge cavitation and vortex cavitation

FIG. 7    shows a comparison where in the right image, cavitation extends to the nozzle exit;
FIG. 8    shows a near-nozzle comparison where in the right image, cavitation extends to the nozzle exit;
FIG. 9    illustrates improvement of lubrication by pressure increase to achieve cavitation to the nozzle exit;
FIG. 10    illustrates measured mass flow rates relatively to pressure;
FIG. 11    are experimental images of created sprays in dependence of injection stroke lengths;
FIG. 12    illustrates simulation results for cavitation at different temperatures;
FIG. 13    is a graph for cavitation number C at P=40bar and D=0.3 in dependence of varying T;
FIG. 14    is a graph for cavitation number C at D=0.3 in dependence of varying P for T=60, 100, and 140°C;
FIG. 15    is a graph for cavitation number C at P=40bar in dependence of varying D for T=60 and 100°C;
FIG. 16    is a graph for cavitation number C at T=100°C in dependence of varying D for P=20, 40 and 60 bar;
FIG. 17    is a graph for cavitation number C at D=0.3 and T=100°C in dependence of varying P;
FIG. 18    is a graph for cavitation number C at P=40bar and T=100°C in dependence of varying D;
FIG. 19    shows the dependence of viscosity on temperature T for different brands of lubricants;
FIG. 20    shows Reynolds numbers for various experimental series in relation to cavitation.

## DETAILED DESCRIPTION / PREFERRED EMBODIMENT

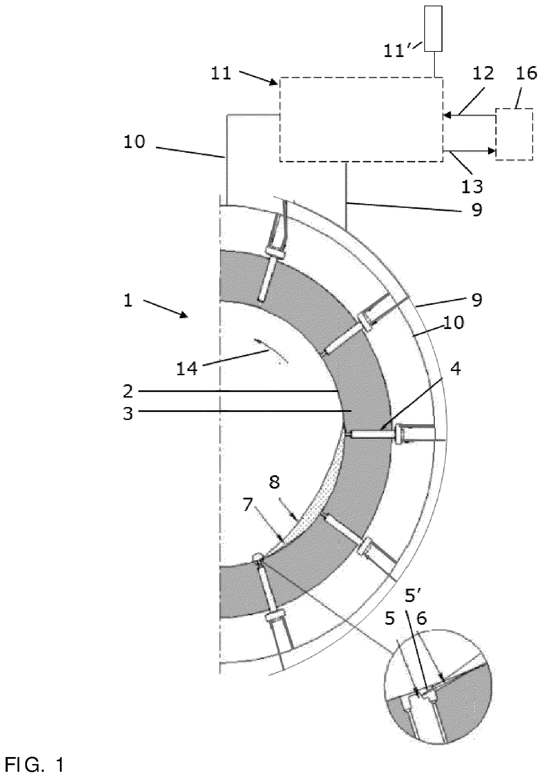

FIG. 1 illustrates one half of a cylinder 1 of a large two-stroke engine, for example marine diesel engine. The cylinder 1 comprises a cylinder liner 2 on the inner side of the cylinder wall 3. Inside the cylinder wall 3 and extending through the cylinder wall 3, there are provided a plurality of injectors 4 for injection of lubricant into the cylinder 1. As illustrated, the injectors 4 are distributed along the perimeter on a circle with the same angular distance between adjacent injectors 4, although this is not strictly necessary. Also, the arrangement along a circle is not necessary, seeing that an arrangement with axially shifted injectors is also possible, for example every second injector shifted relatively to a neighbouring injector.

As an example, among alternatives, the injectors 4 receive lubrication oil from a controller 11 through a common feed conduit 9, also called "common rail". Alternatively, the injectors 4 are arranged in groups where each group receives lubrication oil from the controller 11 through a common feed conduit 9 for each group. For example, there are two groups of injectors 4, such that neighbouring injectors along the perimeter alternatingly belong to one or the other group. As a further alternative, a controller 11 is provided for each single injector and a feed conduit 9 is provided for each injector. As an even further alternative, a controller 11 is provided with a plurality of feed conduits 9 with one feed conduit 9 for each single injector 4.

Each of the injectors 4 has a nozzle 5 with a nozzle aperture 5' from which a fine atomized spray 8 with miniature droplets 7 is ejected under high pressure into the cylinder 1, which in in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP. Optionally, the cylinder liner 2 is provided with free cuts 6 for providing adequate space for the spray 8 or jet from the injector 4.

Optionally, the injectors 4 are connected to the controller 11 by a control line 10. Several possibilities exist for such a control line 10. In some embodiments, the control line 10 is a hydraulic pipe which is controlling a hydraulic injection valve inside the injector 4 such that pressurising the hydraulic pipe opens or closes the hydraulic injection valve. Alternatively, the control line 10 is an electrical wire that delivers electrical power to an electrical valve in the injector 4, for example a solenoid valve. These examples are not exhaustive, as other possibilities for control of injection exist.

The controller 11 is connected to a supply conduit 12 for receiving lubricant from a lubricant supply 16, including an oil pump, and a return conduit 13 for return of lubricant, typically to an oil reservoir, typically for recirculation of lubricant. The lubricant pressure in the supply conduit 12 is higher than the pressure in the return conduit 13, for example at least two times higher. Typically, the lubricant pressure in the return conduit 13 is in the range of 1-15 bar, for example in the range of 5-15 bar.

In the prior art, it has been described that the pressure for injection by the SIP principle is in the range of 20-100 bar, and the prior art lubricant pressure in the supply conduit 12 is correspondingly in the range of 20-100 bar, as the high pressure for the injectors is achieved by the lubricant from the supply conduit 12. However, in practice, when SIP injectors have been installed in marine engines under normal operation with SIP injection, the pressure has been at 37 bar and the temperature about 55°C. In the present invention, as will become more apparent in the following, in order to achieve cavitation in the nozzle for the same nozzle, the same lubricant, and the same temperature, a higher pressure of at least 60 bar is necessary, for example in the range 60-300 bar.

The controller 11 supplies lubrication oil to the injectors 4 in precisely timed pulses which are synchronised with the piston motion in the cylinder 1 of the engine. For the synchronisation, the controller system 11 is electronically connected a computer 11' which monitors parameters for the actual state and motion of the engine, for example speed, load, and position of the crankshaft, as the latter reveals the position of the pistons in the cylinders. Potentially, the computer 11' is part of the controller 11.

The temperature of the lubricant in the feed conduit 9 is optionally determined by the lubricant supply in the supply conduit 12 or, alternatively, regulated by or in the controller 11.

The injectors 4 can be of various types, for examples as disclosed in international patent applications WO2002/35068, WO2004/038189, WO2005/124112, WO2010/149162, WO2012/126480, WO2012/126473, WO2014/048438, and WO2016/173601 or in Danish patent DK178427.

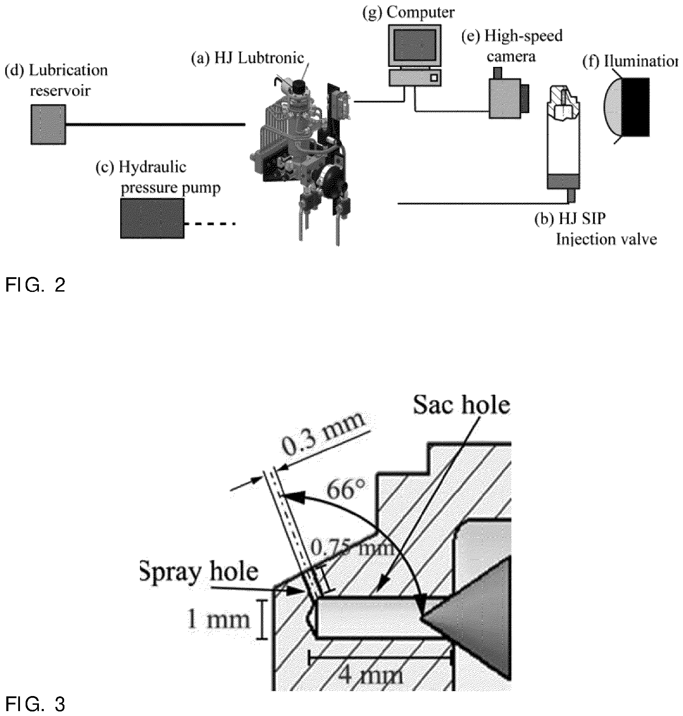

FIG. 2 illustrates an example of an experimental setup for testing various types of injectors and adjusting parameters in a laboratory prior to insertion of injectors 4, for example of the same type, into an engine. In the laboratory, the conditions for cavitation are tested, and parameters adjusted in order to provide a parameter set for controlled and stable cavitation as a method for optimizing the lubrication in the engine.

The exemplified experimental laboratory setup was used for testing cavitation conditions for optimising sprays. The setup comprised a HJ Lubtronic system (a) from Hans Jensen Lubricators A/S, which delivers 85 mg lubrication oil per injection to a heated HJ-SIP injection valve (b). The opening pressure of the injection valve is 3.7 MPa. The lubrication oil is injected in to ambient atmospheric conditions. The lubricator is supplied with 6 MPa in hydraulic pressure from a pump station (c) and fresh lubrication oil from a heated reservoir (d). The high-speed camera (e) used in this study is a Photron Fastcam SA5. Images are taken with a frame rate of 1000 frames per seconds (fps) with a shutter speed of 1/161000 seconds. A 1000W halogen lamp is used as illumination source (f). Both the high-speed camera and the lubricator are controlled by a computer (g). The lubrication oil used is Mobilgaard 570™, which is a commercial lubrication oil from ExxonMobil®. The properties of the lubrication oil are shown in Table 1, where the temperature T is in degrees Celcius, however, the approximation being valid for T>20°C.

Table 1

| Oil property | Value |
|---|---|
| Vapor Pressure | $P_v$ = 13 MPa |
| Liquid Density | $\rho_l(T) = -0.6087 \cdot T + 943.97$ |
| Liquid Viscosity | $\mu(T) = 0.00610 \cdot e^{1246/(8.31 \cdot T)}$ |

Cavitation inside the spray nozzle is captured using a shadowgraphic imaging technique. The high-speed camera and illumination source is placed on either side of the spray nozzle, which is manufactured in a transparent poly(methyl methacrylate) (PMMA) material. It was found that the refractive index of lubrication oil and PMMA material matched, and therefore refraction appears only at the phase interface between the liquid and vapor. This means that phase interfaces will appear as a dark shadow on the image.

The internal geometry of the spray nozzle is shown in FIG. 3. This geometry corresponds to nozzles in injectors that are currently used for SIP injection of lubricant into cylinders of marine engines.

The experiments are conducted at various Reynolds numbers Re and cavitation parameter σ, which are described in equation 1 and 2, respectively, below and of which both are related to the degree of cavitation.

$$\text{Re} = \frac{\rho_l \cdot U_n \cdot D}{\mu} \qquad (1)$$

$$\sigma = \frac{P_a - P_v}{0.5 \cdot \rho_l \cdot U_n^2} \qquad (2)$$

In the equations, Pa is the atmospheric pressure, Pv is the lubricant vapor pressure, ρl the lubricant density, Un the mean lubricant velocity in the nozzle, μ is the liquid viscosity, and D is the diameter of the spray hole. The Reynolds number Re and cavitation parameter σ are controlled by changing the temperature of the lubricant. The change in temperature has the highest impact on the Reynolds number, as an increase of the lubricant temperature reduces the lubricant viscosity and vice versa. The Reynolds number for the experiments is between 200 and 800.

It is pointed out that the mean liquid velocity in the nozzle Un can be expressed by the pressure of the lubricant as delivered from the supply line 12 (see FIG. 1) into the injector and at the nozzle.

$$U_n = \sqrt{\frac{2 \cdot P}{\rho_l}}$$

$$(3)$$

When inserted into the above expression (1), the Reynolds number becomes the following

$$Re = \sqrt{\frac{2 \cdot P}{\rho_l}} \cdot \frac{\rho_l \cdot D}{\mu}$$

$$(4)$$

This is a simple expression where the Reynolds number is determined by the delivery pressure P, the lubricant density $\rho_l$, the nozzle exit diameter D, and the lubricant viscosity $\mu$, which in turn is dependent on the temperature.

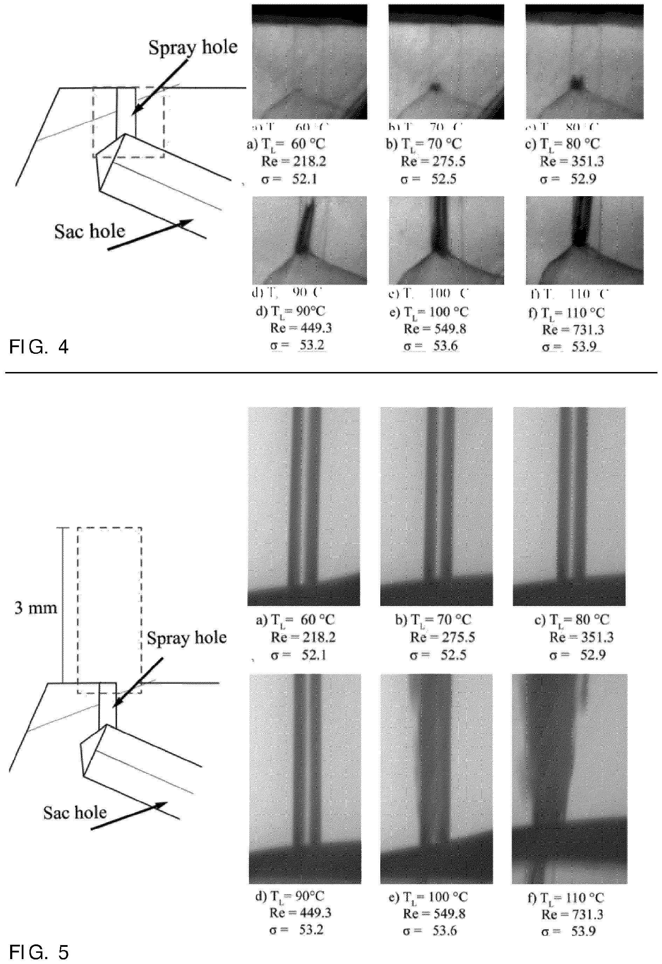

FIG.4 shows high-speed shadowgraphic images of the internal nozzle flow at different Reynolds and cavitation parameter $\sigma$, which is only controlled by the liquid temperature, as the temperature changes the viscosity of the lubricant, while the pressure in the experiments was 40 bar. In the experiments, the temperature has been chosen as the variable instead of the viscosity, as the temperature is a parameter that is illustrative and also easily adjustable in practice when operating an engine. When using a different lubricant, the viscosity/temperature relationship is easily adjusted, as the viscosity is usually known for the product.

In FIG. 4, it is shown that cavitation is not present, when the liquid temperature is 60°C, which is slightly higher than the lubricant temperature of T=55°C in SIP injectors in use in marine diesel engines in the prior art and currently in use. This shows that SIP injection in practice has been performed with sprays where no cavitation was present in the nozzle. It is pointed out that the temperature of the lubricant for injection in commercially available is 55°C, which is lower than the temperature of around 100°C of the cylinder liner.

In FIG. 4, it is also shown that cavitation emerges at the left side of the spray hole as temperature increases above 60°C. The size of cavitation is highly dependent on the liquid temperature, as both length and width of the cavitation volume increases with increasing temperature. When the liquid temperature is above 90°C, for example at 100°C, the cavitation extends to the nozzle exit. As the cavitation is not fully attached at one side of the nozzle wall and due to the asymmetrical geometry of the internal cavity, it is assumed that the liquid is exposed to a swirling flow which is responsible for vortex cavitation. Vortex cavitation or string cavitation is created in the core of strong recirculation zones in the liquid, where the liquid pressure drops below its vapor pressure. This is a different situation than the hydraulic flip, as reported in the prior art (Sou 2007) which would suppress liquid atomization.

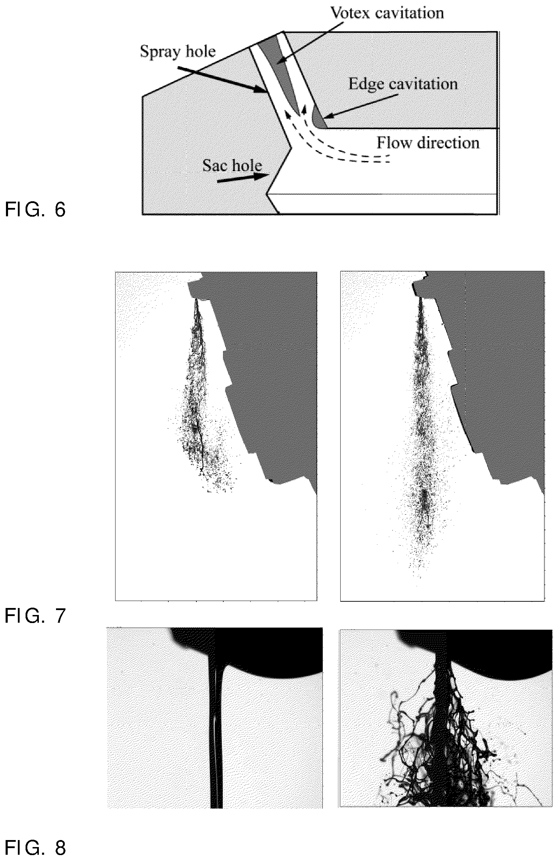

From numerical simulations, the cavitation could be reproduced, and the following conclusion could be drawn, with reference to the illustration in FIG. 6. At the beginning of the spray hole, a high degree of cavitation is attached at one side of the wall. This mechanism is known as edge cavitation and is created by the pressure drop in the liquid at the wall. Furthermore, two circular cavitation zones are observed at the exit and near the exit of the spray hole. These zones are caused by the swirling motion of the liquid, where cavitation is created in the core of liquid vortices. The vortices in the nozzle become more prominent as the temperature increases. In addition to disturbances from cavitation, the ratio between the velocity components is important for the break-up of liquid jets. Cavitation with vortices is advantageous in that it prevents collapse of the cavitation, which is in contrast to the discussion in the introduction of cavitation flip and spray collapse for experiments with low viscous fuel (Sou et al., 2007).

It is observed in Figure 4, that the cavitation parameter $\sigma$ is largely constant, whereas the Reynolds number varies substantially. The change in the cavitation conditions can be attributed to the change in the Reynolds number.

Having identified the mechanisms leading to the cavitation structures and their dependence on liquid temperature, it is considered important to investigate the effects on the subsequent spray. FIG. 5 shows shadowgraphic images of the liquid stream injected into the atmosphere. The images show that the liquid is undisturbed and jet shaped at temperatures up to 90 °C. At 100 °C and 110 °C, the liquid stream is more disrupted and the spray angle is increased. Furthermore, this also leads to shorter breakup-length and enhanced degree of liquid atomization.

Comparing the observations made from the internal flow in FIG. 4 and subsequent spray in FIG. 5, both made at a pressure of 40 bar, it is obvious that the degree of atomization increases significantly if the cavitation extends to end of the spray hole. This is in contrast to cases where the cavitation collapses in the nozzle volume, which results in a jet-shaped liquid stream. It is assumed, that the different behavior is due to viscoelastic damping of the liquid. If the cavitation collapses inside the nozzle volume, the liquid will stabilize the stochastic disturbances introduced and when the cavitation extends to the exit the disturbances are directly transferred to the spray.

As a conclusion, despite certain similarities between cavitation of low viscous liquids, such as liquid fuel, and cavitation of highly viscous liquids, such as lubricant, the results show that there are different effects achieved with respect to lubricant sprays. These results are utmost surprising. Whereas cavitation at the nozzle exit for diesel fuel was reported to lead to collapse of sprays, improved spray characteristics were found for lubricant sprays when cavitation extends to the nozzle exit. This is illustrated in more detail in FIG. 7 and 8.

In FIG. 7, the right image is a situation with cavitation extending to the nozzle exit and the left image is for a low degree of cavitation. The right spray turns out to have smaller droplets, which results in better distribution of the lubrication.

In FIG. 8, it is shown in the right image that the breakup of the spray occurs immediately at the nozzle exit if the cavitation extends to the nozzle exit. This spray was achieved with a pressure of 60 bar at a temperature of T=100°C. Without cavitation, the pressure would have to be multiple times larger for achieving the same breakup outside the nozzle.

In practice, once, parameters for pressure and viscosity, including temperature, have been established in the laboratory for stable, controlled cavitation, lubricant injectors of the same or similar type are provided in the engine and run with such parameters.

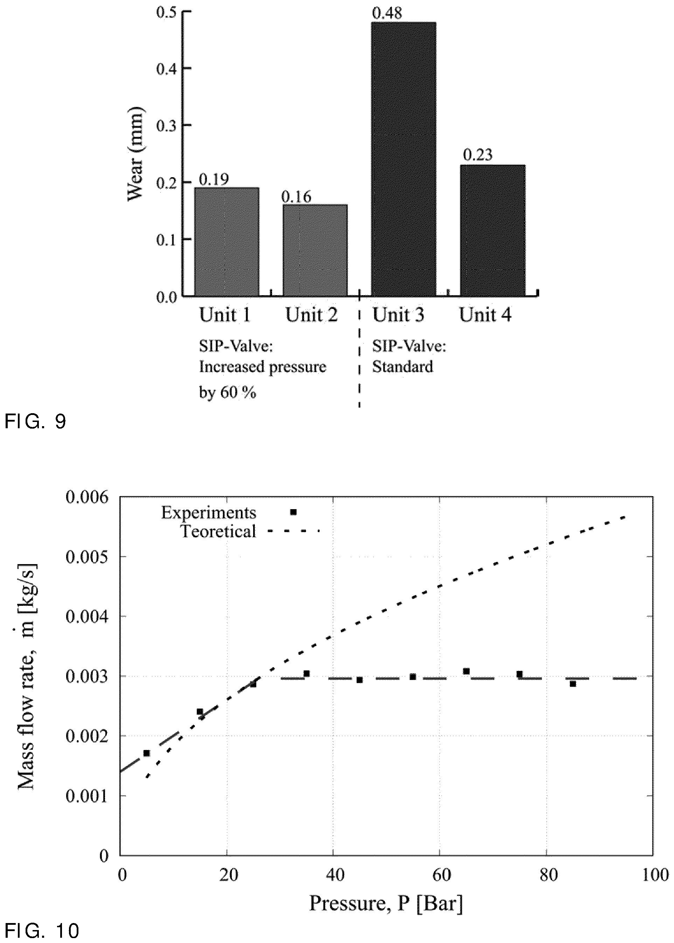

In a practical test, it was shown that an improved spray was obtained with better lubrication than under standard conditions. Whereas standard conditions for a specific injector was a lubricant injection pressure of 37 bar, a raise in pressure by 60% to 60 bar decreased wear on the cylinder. This is illustrated in FIG. 9. It proves that cavitation significantly improves lubrication.

FIG. 10 shows influence of cavitation on the mass flow rate of Mobilgaard 570 lubricant at a temperature of 105°C through the nozzle as described above. It is seen that an increase in pressure does not change the mass flow rate, which stays constant at pressures higher than about 26 bar for this type of nozzle. However, although the mass flow rate is constant over a large pressure range, this does not imply that the spray itself is stable and controlled. For example, as it also was discussed above, the prior art use of the injectors at 37 bar is well inside the range of pressure where the mass flow rate is stable, however, a stable controlled spray was only achieved experimentally at higher pressure of 60 bar for the specific type of nozzle, namely when cavitation occurred.

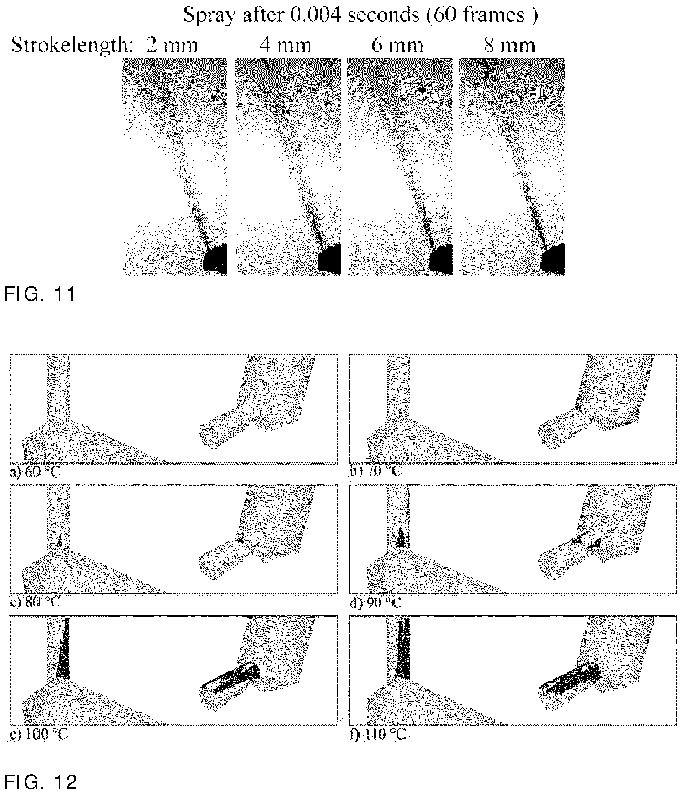

The limitation of the flow rate has an advantageous side effect in that the quality of the spray is independent of the injected volume. The Lubtronic system regulates the injection volume by adjusting the stroke length of a hydraulic piston pump. In a further experiment, the stroke length of the injection system was adjusted, as illustrated in FIG. 11. As is clear from the images, the spray did not change when the stroke length was changed.

By controlling and adjusting the degree of cavitation in the lubricant nozzle, for example by changing the injection pressure, the lubricant spray can be adjusted to more or less atomization in dependence on the engine parameters. Instead or in addition to pressure variation, the viscosity of the lubricant can be adjusted by changing its temperature.

Mainly, the cavitation is determined by the nozzle exit aperture, the lubricant pressure and the lubricant viscosity. To some degree, also the internal nozzle geometry plays a role. Therefore, it is advantageous to run experiments with varying parameters in the laboratory and thereby characterising a specific nozzle type with respect to cavitation. Once, the useful and characterising parameters for cavitation has been found, these parameters are then used in operation, for example standard operation, in an engine of the type as discussed above.

FIG. 12 illustrates numerical simulations which have been illustrated graphically. The pressure was P=40 bar. When comparing with FIG. 4, it is observed that the simulations reproduce the experimental results satisfactory. At 70°C, as illustrated in FIG. 12b, there is a slight onset of cavitation, and at 100°C, as illustrated in FIG. 12e, cavitation extends to the nozzle exit. In FIG. 12d at 90°C, the simulation slightly underestimates the experimentally found cavitation. However, this is attributed to model uncertainties.

It is pointed out in this connection that optimised spray is achieved when cavitation extends to the nozzle exit. However, cavitation extending to at least halfway through the spray hole has been found as a good alternative optimization, as cavitation moves quickly towards the nozzle exit with only slight increase of temperature. But already a minor degree of cavitation is an improvement.

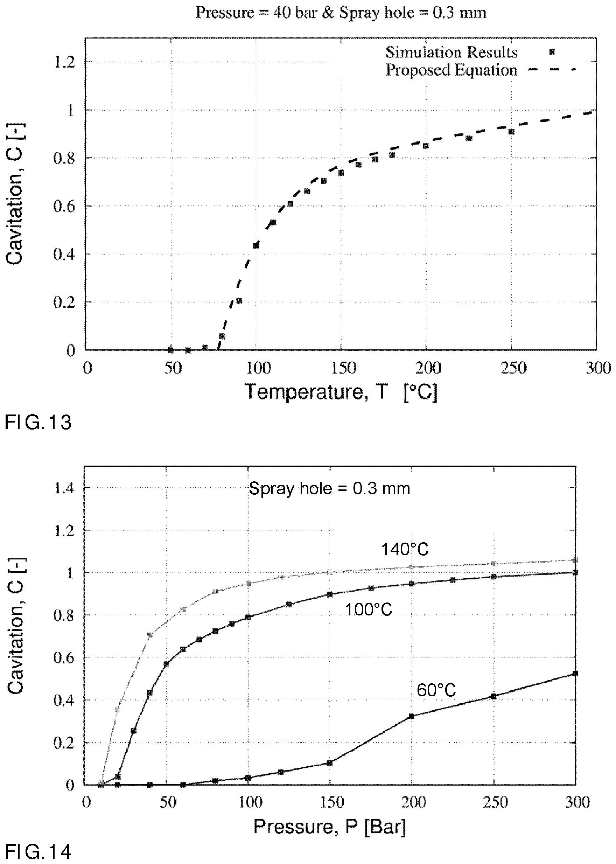

FIG. 13 shows a graph that illustrates the results from the simulations of FIG. 12, which were quantified as a cavitation number C, which expresses the degree of cavitation. The cavitation number C is approximately a measure for the volume of cavitation in the spray hole and has been found by counting the number of geometrical elements with cavitation. It stems from the simulation with a finite number of elements. For a scale between zero and unity, the cavitation number C has been normalized to unity for results for P = 300 bar, T = 100°C, and D = 0.3 mm.

It is pointed out for completeness that the cavitation number C is different from the cavitation parameter $\sigma$ of equation (2) above.

In FIG. 13, it is seen that the cavitation number C is zero for 50°C and 60°C. In agreement with the results from FIG. 12, development of cavitation starts at 70°C, and is significant from 80°C onwards, where the curve is steeply increasing toward higher temperatures.

For completeness, it is repeated here that spray formation is possible without cavitation. However, a better spray is obtained if cavitation is present, as break-up of the lubricant into a spray can be achieved at relatively low pressure, which was also discussed in relation to FIG. 8. The best spray results are obtained for cavitation extending to the nozzle exit. An illustration in support was shown in FIG. 7. As earlier mentioned, this is in contrast to the conclusions in the prior art where cavitation at the nozzle exit is regarded as detrimental. Also, the experimental findings, as discussed above, show that for lubricant injection, cavitation extending to the nozzle exit is best for a stable and controlled spray. As the cavitation extends to the nozzle exit at 100°C, this temperature has been used for investigating the conditions around cavitation when varying the pressure P and the nozzle diameter D.

In FIG. 14, the cavitation number C has been illustrated for three temperatures, where the lowest curve is for 60°C. At the pressure of 37 bar, which is currently commonly used in SIP injectors, there is no cavitation, and cavitation starts around 60 bar. At higher temperatures, the cavitation starts at lower pressure and rise steeply. For 60 °C and 70 bar, the value of C is approximately 0.02.

This value of C=0.02 expresses cavitation in the nozzle, although also lower values of C>0 imply cavitation that has influence on the lubrication quality. For example, when comparing to the results of FIG. 9 where a reduction was seen in the wear of the cylinder already when raising the pressure from 37 bar to 60 bar, where cavitation practically just evolves for increasing pressure, it proves that even a minute degree of cavitation can bring improvements for the spray formation and the lubrication quality.

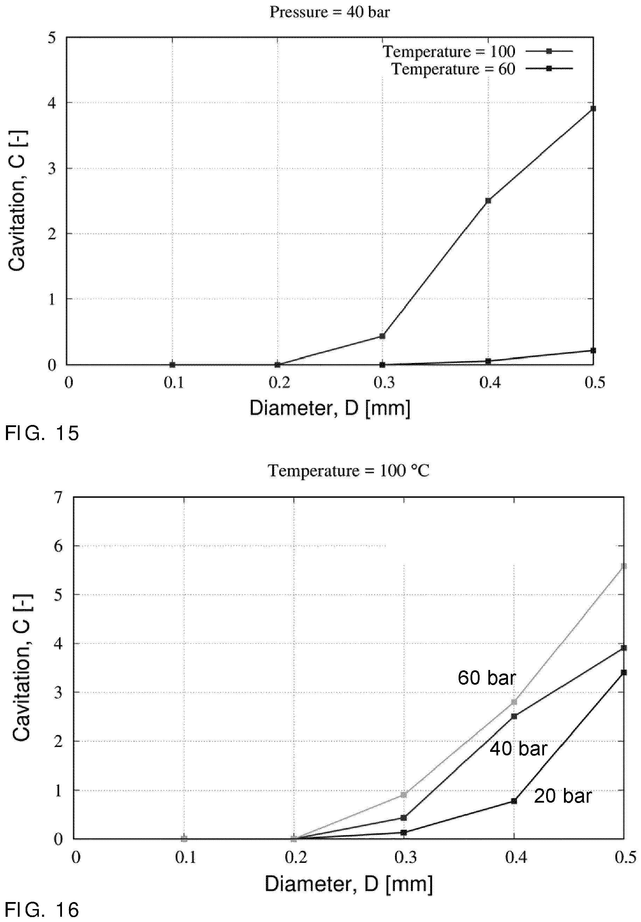

In FIG. 15, it is seen that cavitation increases with nozzle diameter D, the lower curve is for 60°C and does show cavitation for nozzle diameters D=0.4 and D=0.5. At D=0.5, cavitation extends to the nozzle exit. At higher temperatures, for example higher than 80°C, for example for 100°C as illustrated, the cavitation number increases drastically, even beyond 1, which was the normalised value for the parameter triplet D = 0.3 mm, P = 300 bar and T = 100°C.

FIG. 16 shows curves for variations in the nozzle exit diameter D at 100°C for three pressures P. The upper curve of FIG. 15 is shown as the middle curve in FIG. 16. Above the middle curve are results for 60 bar and below the middle curve are results for 20 bar. It is observed that cavitation at 100°C occurs at diameters above 0.2 mm and increases with diameter.

In the simulations, it was found that cavitation to the nozzle exit exists for values of C>0.2. This is a surprising simple result for expressing a complicated phenomenon.

Furthermore, it turned out that C could be parametrically expressed by the following expression, where the values for the constants are found in the table below.

$$C(T,P,D) = A1 * e^{(B1*T)} + C1 * e^{(F1*T)} + A2 * e^{(B2*P)} + C2 * e^{(F2*P)} + A3 * D + B3$$

| Constant | Value |
|----------|----------|
| A1 | 0.6689 |
| B1 | 0.001233 |
| C1 | -11.39 |
| F1 | -0.03487 |
| A2 | 0.7888 |
| B2 | 0.000855 |
| C2 | -1.473 |
| F2 | -0.033 |
| A3 | 16.27 |
| B3 | -5.28 |

FIG. 13 shows a comparison of the parameterised curve at P=40 bar with the simulation results in dependence of the temperature. The curve is valid for pressure P>80 bar.

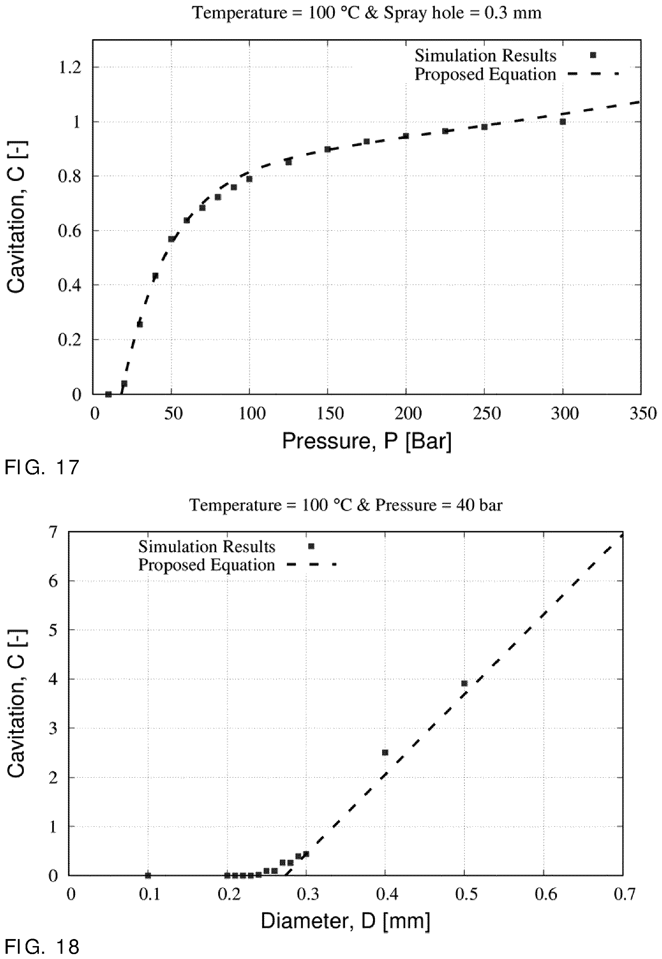

FIG. 17 shows the parameterised curve at T=100 °C in comparison with simulated results when pressure is varied. The curve is valid for pressures above 20 bar.

FIG. 18 shows variations of the parameterised curve with the nozzle diameter. The curve is valid for nozzle diameters D>2.8 mm.

It is therefore possible for certain ranges of values of pressure P, nozzle exit diameter D, and temperature T to predict cavitation by the mathematical expression as given above. The ranges are realistic ranges for lubricant injectors with the SIP lubrication principle. Cavitation appears for C>0, in practical approximation for C>0.02, and extends to the nozzle exit for C>0.2.

The temperature was related to the viscosity for a special type of lubricant, namely Mobilgaard 570, as given in Table 1 above, namely

$$\mu(T) = 0.00610 \cdot e^{1246/(8.31 \cdot T)},$$

 where T is in degree Celsius and for T>20°C.

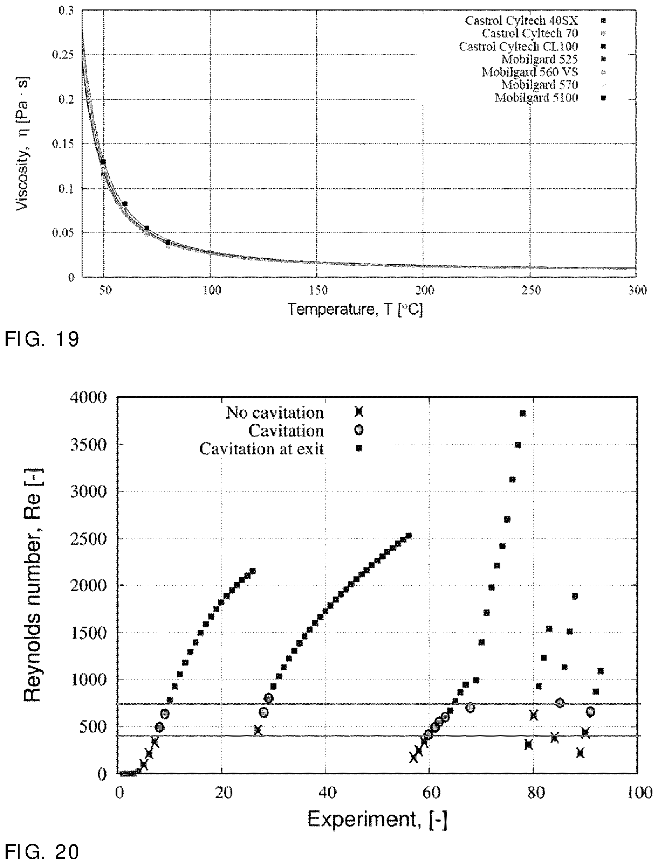

The relation between the viscosity and temperature is shown in FIG. 19. This graph shows the temperature and viscosity relation for a variety of typically used oils in marine diesel engines. The viscosity varies very little among these oils, why the curves with varying temperature as shown and described above apply equally well to these oils

For oils that have a viscosity given by the above formulae for viscosity in dependence of the temperature, as illustrated in FIG. 19, the following relationship can be deduced from the graphs in FIG. 14, 15, and 16:

For cavitation from FIG. 14:

D≥0.3 mm, T≥60°C, P>60 bar
D≥0.3 mm, T≥100°C, P≥10 bar
D≥0.3 mm, T≥140°C, P≥10 bar

For cavitation to the nozzle exit from FIG. 14:

D≥0.3 mm, T≥60°C, P>150 bar
D≥0.3 mm, T≥100°C, P>10 bar
D≥0.3 mm, T≥140°C, P>10 bar

For cavitation from FIG. 15:

D>0.2mm, T≥100°C, P≥40 bar
D>0.3mm, T≥60°C, P≥40 bar

For cavitation to the nozzle exit from FIG. 15:

D>0.23 mm, T≥100°C, P≥40 bar
D≥0.5mm, T≥60°C, P≥40 bar

For cavitation from FIG. 16:
D>0.2 mm, T≥100°C, P≥20 bar
For cavitation to the nozzle exit from FIG. 16:

D>0.21 mm, T≥100°C, P≥60 bar
D>0.23 mm, T≥100°C, P≥40 bar
D>0.31 mm, T≥100°C, P>20 bar

Expressing the mathematical formula for the cavitation number C in terms of viscosity, it becomes more universal as follows:

$$C(\mu, P, D) = A1 * e^{\left(\frac{B1 * G1}{\ln(G2 * \mu)}\right)} + C1 * e^{\left(\frac{F1 * G1}{\ln(G2 * \mu)}\right)} + A2 * e^{(B2 * P)} + C2 * e^{(F2 * P)} + A3 * D + B3$$

| Constant | Values |
|---|---|
| A1 | 0.6689 |
| B1 | 0.001233 |
| C1 | -11.39 |

(continued)

| Constant | Values |
| --- | --- |
| F1 | -0.034870 |
| A2 | 0.7888 |
| B2 | 0.000855 |
| C2 | -1.473 |
| F2 | -0.033 |
| A3 | 16.27 |
| B3 | -5.28 |
| G1 | 149.94 |
| G2 | 163.93 |

Further simulations have shown that the expression for C is robust with respect to variations of the angle between the central axis of the spray hole and the central axis of the sac hole. Reference is made to FIG. 3 for illustration of the angle, which in the current case is 66 degrees. For example, for practical purposes, the expression for C does not change when varying the angle in the range of 30-90 degrees. For variations of the length of the spray hole, the value of C was also relatively robust, and for achieving cavitation to the nozzle exit, it turned out that the lower limit value of C>0.2 for cavitation extending to the nozzle exit varied by less than a factor of 2 when varying the length between 0.5 mm and 1 mm. Thus, the parametric expression for C is robust with respect to constructional changes of the nozzle and valid over a wide range of pressure and viscosity as well as nozzle exit diameter. Taking into regard that the values for C change drastically with temperature and pressure for T>80 and P>30, as illustrated in FIG. 13 and FIG. 14, it is reasonable to set the lower limit of C>0.1 for cavitation at the nozzle exit or at least close to the nozzle exit, providing optimised spray conditions, especially useful for SIP injection.

In FIG. 20, the simulation results from the figures above have been summarised and illustrated with respect to the Reynolds number. It is observed that cavitation reaches down to Reynolds number Re=450. Cavitation to the nozzle exit appear above Re=750. This is in agreement with FIG. 4.

As a conclusion, cavitation for lubricant injection is beneficial, as it results in a better breakup of the lubricant into droplets, especially when the cavitation extends to the nozzle exit. Simulations and experiments are in agreement. A universal mathematical expression has been constructed for expressing cavitation and cavitation to the nozzle exit.

**Claims**

1. A method of lubricating a large two-stroke engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases;

    wherein each lubricant injector (4) comprises a nozzle (5), the nozzle (5) comprising a nozzle exit from which the lubricant leaves the nozzle into the cylinder; wherein the nozzle exit has a diameter D if the nozzle is circular, or wherein the nozzle has an equivalent diameter D which is two times the square root of the nozzle exit area divided by Pi≈3.14, if the nozzle is not circular;
    wherein the method comprises providing the lubricant with a density $\rho$, viscosity $\mu$ and a pressure P to the nozzle aperture and injection of lubricant into the cylinder (1) as a spray during operation of the engine,
    **characterized in that** the method further comprises providing ultrasonic vibrations in the nozzle and selecting the density $\rho$, viscosity $\mu$ and the pressure P for a given diameter D so as to inject the lubricant into the cylinder through the nozzle exit with a Reynolds number above 450 for inducing lubricant cavitation in the nozzle during the injection and influencing characteristics of the spray by the cavitation.

2. A method according to claim 1, wherein the lubricants is a lubricant for marine engines and follows a viscosity given by the temperature as follows.

$$\mu(T) = 0.00610 \cdot e^{1246/(8.31 \cdot T)},$$

wherein T is in degrees Celsius and for T>20°C;
wherein D, T, and P are given by A, B, C, D, E, or F, wherein

A) D≥0.3 mm, T≥60°C, P≥60 bar,
B) D≥0.3 mm, T≥100°C, P>10 bar,
C) D≥0.3 mm, T≥140°C, P≥10 bar,
D) D>0.2mm, T≥100°C, P≥40 bar,
E) D>0.3mm, T≥60°C, P≥40 bar,
F) D>0.2 mm, T≥100°C, P≥20 bar.

3. A method according to any preceding claim, wherein the method comprises injecting the lubricant into the cylinder while cavitation in the nozzle is extending to the nozzle exit.

4. A method according to any preceding claim, wherein D, T, and P are given by G, H, I, J, K, L, or M, wherein

G) D≥0.3 mm, T≥60°C, P≥150 bar,
H) D≥0.3 mm, T≥100°C, P>10 bar,
I) D≥0.3 mm, T≥140°C, P≥10 bar,
J) D>0.23 mm, T≥100°C, P≥40 bar,
K) D≥0.5mm, T≥60°C, P≥40 bar,
L) D>0.21 mm, T≥100°C, P≥60 bar,
M) D>0.31 mm, T≥100°C, P>20 bar.

5. A method according to any preceding claim, wherein the method comprises injecting the lubricant into the cylinder through the nozzle, wherein the diameter D is at least 0.3 mm; and injecting the lubricant into the cylinder through the nozzle exit at a pressure P above 20 bar and viscosity μ of less than 0.05 Pa•sec.

6. A method according to any preceding claim, wherein the nozzle comprises a spray hole, one end of which forms the nozzle exit; wherein the nozzle comprises a sac hole for flow of lubricant to the spray hole that extends from the sac hole to the nozzle exit; wherein a central longitudinal axis of the spray hole has an angle with a central longitudinal axis of the sac hole, the angle being in the range of 30 to 90 degrees; wherein the cross sectional area of the sac hole perpendicular to its central longitudinal axis is larger than the cross sectional area of the spray hole laterally to its central longitudinal axis; wherein the length of the spray hole is in the range of 0.5-1 mm.

**Patentansprüche**

1. Verfahren zum Schmieren eines großen Zweitaktmotors, der einen Zylinder (1) mit einem Hubkolben im Inneren und mit einer Vielzahl von Schmiermittelinjektoren (4), die entlang eines Umfangs des Zylinders (1) zur Injektion von Schmiermittel in den Zylinder (1) während Injektionsphasen an verschiedenen Positionen an dem Umfang verteilt sind, umfasst;

wobei jeder Schmiermittelinjektor (4) eine Düse (5) umfasst, wobei die Düse (5) einen Düsenaustritt umfasst, von dem aus das Schmiermittel die Düse in den Zylinder verlässt; wobei der Düsenaustritt einen Durchmesser D aufweist, wenn die Düse kreisförmig ist, oder wobei die Düse einen Äquivalentdurchmesser D aufweist, der zweimal die Quadratwurzel der Düsenaustrittsfläche dividiert durch pi=3,14 ist, wenn die Düse nicht kreisförmig ist;
wobei das Verfahren Bereitstellen des Schmiermittels mit einer Dichte p, einer Viskosität μ und einem Druck P an die Düsenöffnung und Injektion von Schmiermittel in den Zylinder (1) als einen Sprühstrahl während des Betriebs des Motors umfasst, **dadurch gekennzeichnet, dass** das Verfahren ferner Bereitstellen von Ultraschallschwingungen in der Düse und Auswählen der Dichte p, der Viskosität μ und des Drucks P für einen gegebenen Durchmesser D derart, dass das Schmiermittel durch den Düsenaustritt mit einer Reynolds-Zahl über 450 in den Zylinder injiziert wird, um eine Schmiermittelkavitation in der Düse während der Injektion zu induzieren und Eigenschaften des Sprühstrahls durch die Kavitation zu beeinflussen, umfasst.

**2.** Verfahren nach Anspruch 1, wobei das Schmiermittel ein Schmiermittel für Schiffsmotoren ist und einer Viskosität, angegeben nach der Temperatur, wie nachstehend folgt:

$$\mu(T) = 0,00610 \cdot e^{1246/(8,31 \cdot T)},$$

wobei T in Grad Celsius und für T>20 °C angegeben ist;
wobei D, T und P durch A, B, C, D, E oder F gegeben sind, wobei

A) D≥0,3 mm, T≥60 °C, P≥60 bar,
B) D≥0,3 mm, T≥100 °C, P>10 bar,
C) D≥0,3 mm, T≥140 °C, P≥10 bar,
D) D>0,2 mm, T≥100 °C, P≥40 bar,
E) D>0,3 mm, T≥60 °C, P≥40 bar,
F) D>0,2 mm, T≥100 °C, P≥20 bar.

**3.** Verfahren nach einem der vorhergehenden Ansprüche, wobei das Verfahren Injizieren des Schmiermittels in den Zylinder, während sich eine Kavitation in der Düse zu dem Düsenaustritt erstreckt, umfasst.

**4.** Verfahren nach einem der vorhergehenden Ansprüche, wobei D, T und P durch G, H, I, J, K, L oder M gegeben sind, wobei G) D≥0,3 mm, T≥60 °C, P≥150 bar,

H) D≥0,3 mm, T≥100 °C, P>10 bar,
I) D≥0,3 mm, T≥140 °C, P≥10 bar,
J) D>0,23 mm, T≥100 °C, P≥40 bar,
K) D≥0,5 mm, T≥60 °C, P≥40 bar,
L) D>0,21 mm, T≥100 °C, P≥60 bar,
M) D>0,31 mm, T≥100 °C, P>20 bar.

**5.** Verfahren nach einem der vorhergehenden Ansprüche, wobei das Verfahren Injizieren des Schmiermittels in den Zylinder durch die Düse, wobei der Durchmesser D mindestens 0,3 mm beträgt; und Injizieren des Schmiermittels in den Zylinder durch den Düsenaustritt mit einem Druck P über 20 bar und einer Viskosität μ von weniger als 0,05 Pa-sec umfasst.

**6.** Verfahren nach einem der vorhergehenden Ansprüche, wobei die Düse eine Sprühöffnung umfasst, wobei ein Ende davon den Düsenaustritt bildet; wobei die Düse eine Sackbohrung für die Strömung von Schmiermittel zur Sprühöffnung umfasst, die sich von der Sackbohrung zum Düsenaustritt erstreckt; wobei eine Mittellängsachse der Sprühöffnung einen Winkel mit einer Mittellängsachse der Sackbohrung aufweist, wobei der Winkel im Bereich von 30 bis 90 Grad liegt; wobei die Querschnittsfläche der Sackbohrung senkrecht zu ihrer Mittellängsachse größer als die Querschnittsfläche der Sprühöffnung quer zu ihrer Mittellängsachse ist; wobei die Länge der Sprühöffnung im Bereich von 0,5-1 mm liegt.

**Revendications**

**1.** Procédé de lubrification d'un gros moteur à deux temps comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à différentes positions du périmètre lors des phases d'injection ;

dans lequel chaque injecteur de lubrifiant (4) comprend une buse (5), la buse (5) comprenant une sortie de buse à partir de laquelle le lubrifiant quitte la buse dans le cylindre ; dans lequel la sortie de buse a un diamètre D si la buse est circulaire, ou dans lequel la buse a un diamètre équivalent D qui est égal à deux fois la racine carrée de la zone de sortie de buse divisée par pi ≈ 3,14 si la buse n'est pas circulaire ; dans lequel le procédé comprend la fourniture du lubrifiant avec une densité ρ, une viscosité μ et une pression P vers l'ouverture de buse et l'injection du lubrifiant dans le cylindre (1) sous forme de pulvérisation pendant le fonctionnement du moteur,
**caractérisé en ce que** le procédé comprend en outre la fourniture de vibrations ultrasonores dans la buse et la sélection de la densité ρ, viscosité μ et de la pression P pour un diamètre D donné de manière à injecter le lubrifiant dans le cylindre à travers la sortie de buse avec un nombre de Reynolds supérieur à 450 pour induire une cavitation de lubrifiant dans la buse pendant l'injection et influencer les caractéristiques de la pulvérisation par la cavitation.

2. Procédé selon la revendication 1, dans lequel le lubrifiant est un lubrifiant pour les moteurs marins et respecte une viscosité donnée par la température comme suit.

$$\mu(T) = 0.00610 \cdot e^{1246/(8.31 \cdot T)},$$

où T est en degrés Celsius et pour T > 20 °C ;
où D, T et P sont indiqués par A, B, C, D, E ou F, où

    A) D ≥ 0,3 mm, T ≥ 60 °C, P ≥ 60 bar,
    B) D ≥ 0,3 mm, T ≥ 100 °C, P > 10 bar,
    C) D ≥ 0,3 mm, T ≥ 140 °C, P ≥ 10 bar,
    D) D > 0,2 mm, T ≥ 100 °C, P ≥ 40 bar,
    E) D > 0,3 mm, T ≥ 60 °C, P ≥ 40 bar,
    F) D > 0,2 mm, T ≥ 100 °C, P ≥ 20 bar.

3. Procédé selon une quelconque revendication précédente, dans lequel le procédé comprend l'injection du lubrifiant dans le cylindre pendant que la cavitation dans la buse s'étend jusqu'à la sortie de buse.

4. Procédé selon une quelconque revendication précédente, dans lequel D, T et P sont indiqués par G, H, I, J, K, L ou M, où

    G) D ≥ 0,3 mm, T ≥ 60 °C, P ≥ 150 bar,
    H) D ≥ 0,3 mm, T ≥ 100 °C, P > 10 bar,
    I) D ≥ 0,3 mm, T ≥ 140 °C, P ≥ 10,
    J) D > 0,23 mm, T ≥ 100 °C, P ≥ 40 bar,
    K) D ≥ 0,5 mm, T ≥ 60 °C, P ≥ 40 bar,
    L) D > 0,21 mm, T ≥ 100 °C, P ≥ 60 bar,
    M) D > 0,31 mm, T ≥ 100 °C, P > 20 bar.

5. Procédé selon une quelconque revendication précédente, dans lequel le procédé comprend l'injection du lubrifiant dans le cylindre à travers la buse, dans lequel le diamètre D est au moins 0,3 mm ; et l'injection du lubrifiant dans le cylindre à travers la sortie de buse à une pression P supérieure à 20 bar et une viscosité μ inférieure à 0,05 Pa-sec.

6. Procédé selon une quelconque revendication précédente, dans lequel la buse comprend un trou de pulvérisation, dont une extrémité forme la sortie de buse ; dans lequel la buse comprend un sac d'injecteur pour l'écoulement de lubrifiant jusqu'au trou de pulvérisation qui s'étend du sac d'injecteur à la sortie de buse ; dans lequel un axe longitudinal central du trou de pulvérisation a un angle par rapport à un axe longitudinal central du sac d'injecteur, l'angle étant dans la plage comprise entre 30 et 90 degrés ; dans lequel l'aire de section transversale du sac d'injecteur perpendiculaire à son axe longitudinal central est plus grande que l'aire de section transversale du trou de pulvérisation latéralement par rapport à son axe longitudinal central ; dans lequel la longueur du trou de pulvérisation est dans la plage comprise entre 0,5 et 1 mm.

FIG. 1

FIG. 2

FIG. 3

a) $T_L = 60\,°C$
Re = 218.2
σ = 52.1

b) $T_L = 70\,°C$
Re = 275.5
σ = 52.5

c) $T_L = 80\,°C$
Re = 351.3
σ = 52.9

d) $T_L = 90°C$
Re = 449.3
σ = 53.2

e) $T_L = 100\,°C$
Re = 549.8
σ = 53.6

f) $T_L = 110\,°C$
Re = 731.3
σ = 53.9

FIG. 4

a) $T_L = 60\,°C$
Re = 218.2
σ = 52.1

b) $T_L = 70\,°C$
Re = 275.5
σ = 52.5

c) $T_L = 80\,°C$
Re = 351.3
σ = 52.9

d) $T_L = 90°C$
Re = 449.3
σ = 53.2

e) $T_L = 100\,°C$
Re = 549.8
σ = 53.6

f) $T_L = 110\,°C$
Re = 731.3
σ = 53.9

FIG. 5

FIG. 6

FIG. 7

FIG. 8

FIG. 9

FIG. 10

Spray after 0.004 seconds (60 frames )

Strokelength: 2 mm    4 mm    6 mm    8 mm

FIG. 11

a) 60 °C

b) 70 °C

c) 80 °C

d) 90 °C

e) 100 °C

f) 110 °C

FIG. 12

Pressure = 40 bar & Spray hole = 0.3 mm

FIG.13

FIG.14

Pressure = 40 bar

FIG. 15

Temperature = 100 °C

FIG. 16

Temperature = 100 °C & Spray hole = 0.3 mm

FIG. 17

Temperature = 100 °C & Pressure = 40 bar

FIG. 18

FIG. 19

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1767751 A
- GB 214922 A
- WO 2017071706 A
- WO 2010149162 A
- WO 2016173601 A
- WO 200235068 A
- WO 2004038189 A
- WO 2005124112 A

- WO 2012126480 A
- WO 2012126473 A
- WO 2014048438 A
- US 7712684 B
- US 4659014 A
- US 2009140067 A
- EP 1116805 A
- DK 178427

**Non-patent literature cited in the description**

- **ANDRIOTIS, A ; GAVAISES, M. ; ARCOUMANIS, C.** Vortex flow and cavitation in diesel injector nozzles. *Journal of Fluid Mechanics,* August 2008, vol. 610, 195-215
- **BERGWERK, W.** Flow pattern in diesel nozzle spray holes, ARCHIVE. *Proceedings of the Institution of Mechanical Engineers 1847-1982 (vols 1-196),* 1959, vol. 173 (1959), 655-660, http://pme.sagepub.com/content/173/1/655.short
- **BICER, B. ; SOU, A.** Turbulence and Bubble Dynamics Models to Simulate Transient Cavitation Flow in Fuel Injector Nozzle B., ILASS Asia. *13th International Conference on Liquid Atomization and Spray Systems,* 2015, 1-8
- **BRUSIANI, F. ; FALFARI, S. ; PELLONI, P.** Influence of the diesel injector hole geometry on the flow conditions emerging from the nozzle. *Energy Procedia,* 2014, vol. 45, 749-758
- **DABIRI, S. ; SIRIGNANO, W. A. ; JOSEPH, D. D.** Cavitation in an orifice flow. *Physics of Fluids,* 2007, vol. 19 (7), 072112
- **DONG, P. ; INABA, T. ; NISHIDA, K. ; SHIMO, D.** Characteristics of the internal flow and the nearfield spray of a single-hole injector and a multi-hole injector for diesel engines, Proceedings of the Institution of Mechanical Engineers, Part D. *Journal of Automobile Engineering,* 2016, vol. 230 (5), 632-649
- **DUMOUCHEL, C. ; LEBOUCHER, N ; LISIECKI, D.** Cavitation and primary atomization in real injectors at low injection pressure condition. *Experiments in Fluids,* 2013, vol. 54 (6
- **FRANC, J.-P ; J.-M.** *Fundamentals of Cavitation,* 2006

- **GARDHOUSE, T. ; SERCEY, G ; CRUA C. ; EDWARDS, S. ; THOMPSON, C.** Shadowgraphic Characterisation of Marine Lubricant Sprays, ILASS - Europe 2014. *26th Annual Conference on Liquid Atomization and Spray Systems,* September 2014
- **HE, Z. ; GUO, G. ; TAO, X. ; ZHONG, W. ; LENG, X. ; WANG, Q.** Study of the effect of nozzle hole shape on internal flow and spray characteristics. *International Communications in Heat and Mass Transfer,* 2016, vol. 71, 1-8
- **JOLLET, S. ; HANSEN, H. ; BITNER, K. ; NIEMEYER, D. ; DINKELACKER, F.** Transparent Nozzles With High Pressure Conditions, ILASS Europe. *26th Annual Conference on Liquid Atomization and Spray Systems,* 2014, 8-10
- **JOLLET, S ; HEILIG, A. ; BITNER, K. ; NIEMEYER, D. ; DINKELACKER, F.** *Comparison of experiments and numerical simulations of high pressure transparent injection nozzles Experimental testrig,* September 2013, 1-4
- **KHMELEV, V.N. ; SHALUNOV, A.V. ; SMERDINA, E.S.** The Cavitation Spraying Of The Viscous Liquids. *Proceedings. 7th Annual 2006 International Workshop and Tutorials,* 2006
- **LI, Z.** Criteria for jet cavitation and cavitationjet drilling. *International Journal of Rock Mechanics and Mining Sciences,* 2014, vol. 71, 204-207, http://dx.doi.org/10.1016/j.ijrmms.2014.03.021
- **MARIASIU, F.** Numerical Investigation of the Effects of Biofuel Characteristics on the Injector Nozzle Erosion Process. *Tribology Transactions,* 2013, vol. 56 (2), 161-168
- **MIRSHAHI, M ; YAN, Y ; NOURI, JM.** Influence of cavitation on near nozzle exit spray. Paper presented at the CAV 2015. 9th Int. Symp. *On Cavitation,* 06 December 2015

- **PAYRI, F. ; BERMUDEZ, V. ; PAYRI, R. ; SALVA-DOR, F. J.** The influence of cavitation on the internal flow and the spray characteristics in diesel injection nozzles. *Fuel,* 2004, vol. 83 (4-5), 419-431
- **PRATAMA, R. H. ; SOU, A. ; WADA, Y. ; YOKO-HATA, H.** Cavitation in Mini-Sac Nozzle and Injected Liquid Jet. *ICLASS 2015, 13th International Conference on Liquid Atomization and Spray Systems,* 2015, (1), 3-9
- **RAJAN, R ; PANDIT, A.B.** Correlations to predict droplet size in ultrasonic atomisation. *Ultrasonics,* 2001, vol. 39, 235-255
- **ROOHI, E. ; ZAHIRI, A. P. ; PASSANDIDEH-FARD, M.** Numerical simulation of cavitation around a two-dimensional hydrofoil using VOF method and LES turbulence model. *Applied Mathematical Modelling,* 2013, vol. 37 (9), 6469-6488
- **SCHMIDT, D. P ; CORRADINI, M. L.** The internal flow of Diesel fuel injector nozzles: a review. *Int J Engine Research. JER 00201 ImechE,* 2001, vol. 2 (6), 1-22
- **SCIENCES, M ; SQUARE, N.** *Vortex flow and cavitation in diesel injector nozzles,* 2008, vol. 610, 195-215
- **SORIANO-PALAO, O. J. ; SOMMERFELD, M. ; BURKHARDT, A.** Modelling the influence of the nozzle geometry on the primary breakup of diesel jets. *International Journal of Spray and Combustion Dynamics,* 2014, vol. 6 (2), 113-146
- **SOU, A. ; HOSOKAWA, S. ; TOMIYAMA, A.** Effects of cavitation in a nozzle on liquid jet atomization. *International Journal of Heat and Mass Transfer,* 2007, vol. 50 (17-18), 3575-3582
- **TAMAKI, N ; SHIMIZU, M.** Enhancement of Atomization of High-Viscous Liquid Jet By Pressure Atomized Nozzle. *ILASS Europe, 12th Triennial International Conference on Liquid Atomization and Spray Systems,* 2002
- **YUAN, W. ; SAUER, J. ; SCHNERR, G. H.** Modeling and computation of unsteady cavitation flows in injection nozzles. *Mecanique et Industries,* 2001, vol. 2 (5), 383-394